# EUROPÄISCHE PATENTANMELDUNG

(11) **EP 1 060 854 A2**
(43) Veröffentlichungstag der Anmeldung: **20.12.2000**
(21) Anmeldenummer: 00110685.5
(22) Anmeldetag: 19.05.2000
(51) Int. Cl.: B28C 9/02, B28C 5/00

(54) **"Verfahren zur Herstellung von abbindenden und erhärtenden Massen für den Berg-,den Tunnel-und Stollen-und/oder den Tiefbau aus Abfallstoffen"**

(30) Priorität: 10.06.1999 DE 19926444
(71) Anmelder: UTR Umwelt GmbH, 45966 Gladbeck (DE)
(72) Erfinder: Koensler, Winfried Dr., 46286 Dorsten (DE)
(74) Vertreter: Spalthoff, Adolf

(57) **Zusammenfassung**

Bei einem erfindungsgemäßen Verfahren zur Herstellung von abbindenden und erhärtenden Massen für den Berg-, den Tunnel- und Stollen- und/oder den Tiefbau aus Abfallstoffen, bei dem unterschiedliche Abfallstoffe entsprechend ihren geochemischen, mineralogischen, technischen und baustoffphysikalischen Eigenschaften zusammengemischt werden, werden unterschiedliche Abfallstoffe vor Ort in unmittelbarer Nähe zum Einsatzort eines Baustoffs zu diesem zusammengemischt.

## Beschreibung

Die Erfindung bezieht sich auf ein Verfahren zur Herstellung von abbindenden und erhärtenden Massen für den Berg-, den Tunnel- und Stollen- und/oder den Tiefbau unter Verwendung von Abfallstoffen, bei dem gleiche oder unterschiedliche Abfallstoffe entsprechend ihren geochemischen, mineralogischen, technischen und baustoffphysikalischen Eigenschaften zusammengemischt werden.

Bei bekannten Verfahren zur Herstellung von Baustoffen werden teilweise hochwertige, nicht erneuerbare Rohstoffe verwendet, was zu einem beträchtlichen Ressourcenverbrauch führt und eine nicht unbeträchtliche Belastung der Umwelt bedeuten kann.

Der Erfindung liegt daher die Aufgabe zugrunde, ein Verfahren zur Herstellung eines Baustoffs für den Berg-, den Tunnel- und und Stollen- und/oder den Tiefbau aus Abfallstoffen anzugeben, bei dem ausschließlich Abfallstoffe in geeigneter Weise und mit einem möglichst geringen technisch-konstruktiven Aufwand zu einem Baustoff zusammenstellbar und als solcher weiterverwendbar sind.

Diese Aufgabe wird erfindungsgemäß durch ein Verfahren zur Herstellung von abbindenden und erhärtenden Massen für den Berg-, den Tunnel- und Stollen- und/oder den Tiefbau aus Abfallstoffen gelöst, bei dem unterschiedliche Abfallstoffe entsprechend ihren geochemischen, mineralogischen, technischen und baustoffphysikalischen Eigenschaften vor Ort in unmittelbarer Nähe zum Einsatzort eines Baustoffs zu diesem zusammengemischt werden.

Zum Zusammenmischen des Baustoffs aus den unterschiedlichen Abfallstoffen werden vorzugsweise vor Ort verwendbare mobile Mischanlagen eingesetzt.

Als Abfallstoffe kommen insbesondere pulverförmige Rückstände aus Verbrennungsanlagen in Betracht.

Hierbei haben sich Aschen, Filterstäube und/oder Reaktionsprodukte aus Steinkohlekraftwerken, Braunkohlekraftwerken, Klärschlammverbrennungsanlagen und/oder sonstigen Abfallverbrennungsanlagen als besonders geeignet erwiesen.

Da die genannten Abfallstoffe hinsichtlich der an den zu erstellenden Baustoff gestellten spezifischen Anforderungen optimal ausgewählt und zusammengestellt werden sollen, ist es vorteilhaft, wenn Komponenten des Baustoffs bildende Abfallstoffe bei der Ermittlung ihrer geochemischen, mineralogischen, technischen und baustoffphysikalischen Eigenschaften auf ihre Eignung als Bindemittel und/oder Füllstoff des Baustoffs untersucht werden.

Entsprechend kann dann zweckmäßigerweise die Reihenfolge der Zudosierung der unterschiedlichen Abfallstoffe beim Zusammenmischen des Baustoffs vor Ort entsprechend den bei der Ermittlung der geochemischen, mineralogischen, technischen und baustoffphysikalischen Eigenschaften der die Komponenten des Baustoffs bildenden Abfallstoffe erzielten Ergebnisse vorgegeben werden.

Folgende Verarbeitungsverfahren sind beispielhaft möglich:
- Zuführung der trockenen Stoffe zur Mischung mit Flüs-
- sigkeit,
- Zuführung der trockenen Stoffe zur Mischung mit Flüs-
- sigkeit, wobei diese Flüssigkeit als dünnflüssige Trübe
- vorab mit einem trockenen Stoff angemischt wurde,
- Mischen zweier oder mehrerer Trübeströme durch natürliche
- Mischvorgänge beim Eintrag in einen zu verfüllenden Hohl-
- raum, ggf. zusammen mit Mischwerkzeugen und
- pneumatisches Zuführen eines trockenen Stoffes zu einem
- Trübestrom.

Aufgrund der infolge der erfindungsgemäß vorgesehenen Untersuchungen der Abfallstoffe vorliegenden Daten ist es möglich, daß der Baustoff jeweils entsprechend einem an ihn im Einzelfall gestellten Anforderungsprofil aus bei der Untersuchung ihrer geochemischen, mineralogischen, technischen und baustoffphysikalischen Eigenschaften als für dieses Anforderungsprofil als geeignet ermittelten Abfallstoffen zusammengemischt wird.

Es hat sich als vorteilhaft erwiesen, wenn zur Herstellung des Baustoffs zunächst ein eine Komponente des Baustoffs bildender Abfallstoff mit einer Anmischflüssigkeit bis zum maximalen Flüssigkeitsbedarf des gesamten Baustoffs angemischt wird.

Vorteilhaft kann die Mischung aus der Anmischflüssigkeit und dem die eine Komponente des Baustoffs bildenden Abfallstoff als Anmischflüssigkeit für den die andere Komponente des Baustoffs bildenden Abfallstoff eingesetzt werden.

Zur Vereinfachung der weiteren Verwendung des in dieser Weise erstellten Baustoffs ist es zweckmäßig, wenn eine Mischung aus Anmischflüssigkeit und zumindest zwei Komponenten des Baustoffs bildenden Abfallstoffen als Suspension hydromechanisch zum Verarbeitungsort gefördert wird.

In weiterer Anpassung an das jeweils vorgegebene Anforderungsprofil kann es vorteilhaft sein, wenn der Mischung aus Anmischflüssigkeit und zumindest zwei Komponenten des Baustoffs bildenden Abfallstoffen zur Erstellung bzw. Beschleunigung der Abbindung des Baustoffs ein eine dritte bzw. weitere Komponente des Baustoffs bildender Abfallstoff hinzugegeben wird.

Als Komponenten für den erfindungsgemäß herzustellenden Baustoff können vorteilhaft Klärschlammasche und Braunkohlenflugasche eingesetzt werden.

Vorteilhaft wird bei diesem Verfahren als erste Komponente des Baustoffs Braunkohlenflugasche mit der Anmischflüssigkeit bis zum maximalen Flüssigkeitsbedarf des gesamten Baustoffs zu einer vorzugsweise dünnflüssigen Suspension angemischt.

Gemäß einer vorteilhaften Ausführungsform dieses Verfahrens wird die Braunkohlenflugasche hierfür trocken angeliefert.

Dieser vorzugsweise dünnflüssigen Suspension kann zweckmäßigerweise dann in einem zweiten Mischvorgang als eine weitere Komponente des Baustoffs bildender Abfallstoff Klärschlammasche hinzugefügt werden, die vorzugsweise ebenfalls trocken angeliefert werden sollte.

Zur Einstellung bzw. Beschleunigung der Abbindung des Baustoffs ist das Hinzugeben von Braunkohlenasche vorteilhaft, die eine dritte bzw. weitere Komponente des Baustoffs bildender Abfallstoff sein kann.

Vorteilhaft kann der gemäß dem erfindungsgemäßen Verfahren hergestellte Baustoff zur Verfüllung von Schächten, zur Verfüllung von Grubenbauen, zur Verfüllung oberflächennaher Hohlräume und zu bei der Sanierung von Industriestandorten anfallenden Verfüllungsmaßnahmen eingesetzt werden.

Im folgenden wird die Erfindung an Hand einer Ausführungsform näher erläutert.

Bei einer Ausführungsform des erfindungsgemäßen Verfahrens zur Herstellung eines Baustoffs für den Berg-, den Tunnel- und Stollen- und/oder den Tiefbau aus Abfallstoffen wird der Baustoff aus einer Mischung aus Klärschlammasche und Braunkohlenflugasche hergestellt.

Sowohl die Klärschlammasche als auch die Braunkohlenflugasche werden zunächst mineralogisch, baustoffphysikalisch, geochemisch und technisch untersucht. Hierbei werden die Klärschlammasche und die Braunkohlenflugasche vorzugsweise auf ihre Eigenschaften als Bindemittel und/oder als Füllstoff für den Baustoff untersucht.

Nachdem die Ergebnisse dieser eingehenden Untersuchung als Ausgangsdaten vorliegen, wird - je nach für den zu erstellenden Baustoff geforderten Anforderungsprofil - eine geeignete Rezeptur zur Herstellung der den Baustoff bildenden Mischung aus Klärschlammasche und Braunkohlenflugasche entwickelt. Die Herstellung dieser Mischung erfolgt vor Ort mit einer oder mehreren geeigneten mobilen Mischanlagen. Bei dem Herstellungsvorgang der Mischung ist u.a. die Reihenfolge der Hinzudosierung der die verschiedenen Komponenten des Baustoffs bildenden Klärschlammasche und Braunkohlenflugasche für die Qualität des entsprechend hergestellten Mörtels bzw. Baustoffs entscheidend.

Im Falle der vorstehend erläuterten Ausführungsform des erfindungsgemäßen Verfahrens wird zunächst die Braunkohlenflugasche, die trocken angeliefert wird, mit einer Anmischflüssigkeit bis zum maximalen Flüssigkeitsbedarf der gesamten, den Baustoff bildenden Mischung angemischt.

Hierbei entsteht eine dünnflüssige Suspension. Diese die Braunkohlenflugasche und die Anmischflüssigkeit enthaltende dünnflüssige Suspension wird dann in einem zweiten Mischvorgang als Anmischflüssigkeit für die Klärschlammasche, die ebenfalls trocken angeliefert wird, genutzt.

Die in der vorstehend geschilderten Weise fertiggestellte Suspension wird dann hydromechanisch bis zum Verarbeitungsort gefördert. Sofern eine Notwendigkeit besteht, wird die Abbindung der den Baustoff bildenden Mischung eingestellt bzw. beschleunigt, indem der vorstehend geschilderten Mischung Braunkohlenasche hinzugefügt wird.

Der aus den genannten Abfallstoffen zusammengesetzte und gemäß dem vorstehend geschilderten Verfahren hergestellte Baustoff kann nach seiner Konditionierung zur Sanierung von Bergwerken, Industriebrachen und anderen oberflächennahen Einsatzbereichen eingesetzt werden. Durch den Einsatz des entsprechend dem vorstehend geschilderten Verfahren hergestellten Baustoff kann zu einer Entlastung der Umwelt beigetragen werden, indem die geochemischen, mineralogischen, technischen und baustoffphysikalischen Eigenschaften der Abfallstoffe gezielt genutzt werden.

Der gemäß dem vorstehend geschilderten Verfahren hergestellte Baustoff kann beim Verfüllen von Schächten, beim Verfüllen nicht mehr benötigter Grubenbaue, beim Verfüllen oberflächennaher Hohlräume und bei der Sanierung von Industriestandorten zum Einsatz kommen.

## Patentansprüche

1. Verfahren zur Herstellung von abbindenden und erhärtenden Massen für den Berg-, den Tunnel- und Stollen- und/oder den Tiefbau aus Abfallstoffen, bei dem unterschiedliche Abfallstoffe entsprechend ihren geochemischen, mineralogischen, technischen und baustoffphysikalischen Eigenschaften zusammengemischt werden, dadurch gekennzeichnet, daß die unterschiedlichen Abfallstoffe vor Ort in unmittelbarer Nähe zum Einsatzort eines Baustoffs zu diesem zusammengemischt werden.

2. Verfahren nach Anspruch 1 bei dem zum Zusammenmischen des Baustoffs aus den unterschiedlichen Abfallstoffen vor Ort mobile Mischanlagen eingesetzt werden.

3. Verfahren nach Anspruch 1 oder 2, bei dem als Abfallstoffe pulverförmige Rückstände aus Verbrennungsanlagen vorgesehen sind.

4. Verfahren nach Anspruch 3, bei dem als Abfallstoffe Aschen, Filterstäube und/oder Reaktionsprodukte aus Steinkohlekraftwerken, Braunkohlekraftwerken, Klärschlammverbrennungsanlagen und/oder sonstigen Abfallverbrennungsanlagen eingesetzt werden.

5. Verfahren nach einem der Ansprüche 1 bis 4, bei dem Komponenten des Baustoffs bildende Abfallstoffe bei der Ermittlung ihrer geochemischen, mineralogischen, technischen und baustoffphysikalischen Eigenschaften auf ihre Eignung als Bindemittel und/oder Füllstoff des Baustoffs untersucht werden.

6. Verfahren nach Anspruch 5, bei dem die Reihenfolge der Zudosierung der unterschiedlichen Abfallstoffe beim Zusammenmischen des Baustoffs vor Ort entsprechend den bei der Ermittlung der geochemischen, mineralogischen, technischen und baustoffphysikalischen Eigenschaften der die Komponenten des Baustoffs bildenden Abfallstoffe erzielten Ergebnisse vorgegeben wird.

7. Verfahren nach Anspruch 5 oder 6, bei dem der Baustoff entsprechend einem an ihn im Einzelfall gestellten Anforderungsprofil aus bei der Untersuchung ihrer geochemischen, mineralogischen, technischen und baustoffphysikalischen Eigenschaften als für dieses Anforderungsprofil als geeignet ermittelten Abfallstoffen zusammengemischt wird.

8. Verfahren nach einem der Ansprüche 1 bis 7, bei dem zur Herstellung des Baustoffs zunächst ein eine Komponente des Baustoffs bildender Abfallstoff mit einer Anmischflüssigkeit bis zum maximalen Flüssigkeitsbedarf des gesamten Baustoffs angemischt wird.

9. Verfahren nach Anspruch 8, bei dem die Mischung aus der Anmischflüssigkeit und dem die eine Komponente des Baustoffs bildenden Abfallstoff als Anmischflüssigkeit für den die andere Komponente des Baustoffs bildenden Abfallstoff eingesetzt wird.

10. Verfahren nach Anspruch 9, bei dem eine Mischung aus Anmischflüssigkeit und zumindest zwei Komponenten des Baustoffs bildenden Abfallstoffen als Suspension hydromechanisch zum Verarbeitungsort gefördert wird.

11. Verfahren nach Anspruch 9 oder 10, bei dem der Mischung aus Anmischflüssigkeit und zumindest zwei Komponenten des Baustoffs bildenden Abfallstoffen zur Erstellung bzw. Beschleunigung der Abbindung des Baustoffs ein eine dritte bzw. weitere Komponente des Baustoffs bildender Abfallstoff hinzugegeben wird.

12. Verfahren nach einem der Ansprüche 1 bis 11, bei dem als Komponenten für den Baustoff Klärschlammasche und Braunkohlenflugasche eingesetzt werden.

13. Verfahren nach einem der Ansprüche 1 bis 12, bei dem als erste Komponente des Baustoffs Braunkohlenflugasche mit der Anmischflüssigkeit bis zum maximalen Flüssigkeitsbedarf des gesamten Baustoffs zu einer vorzugsweise dünnflüssigen Suspension angemischt wird.

14. Verfahren nach Anspruch 13, bei dem die Braunkohlenflugasche trocken angeliefert wird.

15. Verfahren nach Anspruch 13 oder 14, bei dem der vorzugsweise dünnflüssigen Suspension in einem zweiten Mischvorgang als eine weitere Komponente des Baustoffs bildender Abfallstoff Klärschlammasche hinzugefügt wird.

16. Verfahren nach Anspruch 15, bei dem die Klärschlammasche trocken angeliefert wird.

17. Verfahren nach einem der Ansprüche 12 bis 16, bei dem zur Einstellung bzw. Beschleunigung der Abbindung des Baustoffs als eine dritte bzw. weitere Komponente des Baustoffs bildender Abfallstoff Braunkohlenasche hinzugegeben wird.

18. Verwendung eines gemäß den Ansprüchen 1 bis 17 hergestellten Baustoffs zur Verfüllung von Schächten.

19. Verwendung eines gemäß den Ansprüchen 1 bis 17 hergestellten Baustoffs zur Verfüllung von Grubenbauen.

20. Verwendung eines gemäß den Ansprüchen 1 bis 17 hergestellten Baustoffs zur Verfüllung oberflächennaher Hohlräume.

21. Verwendung eines gemäß den Ansprüchen 1 bis 17 hergestellten Baustoffs zu bei der Sanierung von Industriestandorten anfallenden Verfüllungsmaßnahmen.
